# EUROPÄISCHE PATENTSCHRIFT

(11) **EP 3 883 720 B1**
(45) Veröffentlichungstag und Bekanntmachung des Hinweises auf die Patenterteilung: **17.01.2024**
(21) Anmeldenummer: 19789896.8
(22) Anmeldetag: 10.10.2019
(51) Int. Cl.: B23K 26/03, B23K 26/04, B23K 26/38

(54) **VERFAHREN ZUR LASERBEARBEITUNG UND LASERBEARBEITUNGSSYSTEM ZUR DURCHFÜHRUNG DES VERFAHRENS**
METHOD FOR LASER PROCESSING, AND LASER MACHINING SYSTEM FOR CARRYING OUT THE METHOD
PROCÉDÉ D'USINAGE AU LASER ET SYSTÈME D'USINAGE AU LASER DESTINÉ À LA MISE EN OEUVRE DU PROCÉDÉ

(30) Priorität: 22.11.2018 DE 102018129416
(43) Veröffentlichungstag der Anmeldung: 29.09.2021
(73) Patentinhaber: Precitec GmbH & Co. KG, 76571 Gaggenau-Bad Rotenfels (DE)
(72) Erfinder: WECKENMANN, Niklas, 76437 Rastatt (DE)
(74) Vertreter: Ter Meer Steinmeister & Partner
(86) Internationale Anmeldenummer: PCT/EP2019/077480
(87) Internationale Veröffentlichungsnummer: WO 2020/104101

(56) Entgegenhaltungen:
- EP-A1- 1 977 850
- EP-A1- 2 479 533
- WO-A1-2015/039741
- DE-A1-102013 225 108

## Beschreibung

Die vorliegende Offenbarung betrifft ein Verfahren zur Laserbearbeitung eines Werkstücks nach dem Oberbegriff des Anspruchs 1 sowie ein Laserbearbeitungssystem nach dem Oberbegriff des Anspruchs 14 zur Durchführung des Verfahrens.

### Stand der Technik

In einer Vorrichtung zur Materialbearbeitung mittels Laser, z.B. in einem Laserbearbeitungskopf zum Laserschneiden, wird der von einer Laserlichtquelle oder einem Ende einer Laserleitfaser austretende Laserstrahl mit Hilfe einer Strahlführungs- und Fokussierungsoptik auf das zu bearbeitende Werkstück fokussiert oder gebündelt. Standardmäßig wird ein Laserbearbeitungskopf mit einer Kollimatoroptik und einer Fokussierungsoptik verwendet, wobei das Laserlicht über eine Lichtleitfaser, auch als Laserquelle bezeichnet, zugeführt wird.

Im Rahmen der Lasermaterialbearbeitung kann ein Einstechprozess des Laserstrahls in das Werkstück erfolgen. Der Einstechprozess ist dem eigentlichen Schneidprozess beim Laserschneiden vorgelagert. Bei diesem Prozess wird ein initiales Loch im Werkstück erzeugt, das als Startpunkt für den Schneidprozess dient. Eine Dauer des Einstechprozesses ist ein kritischer Faktor für die Effizienz des Bearbeitungsprozesses. Um den Einstechprozess zu verbessern, ist beispielweise aus der Druckschrift DE 11 2014 006 885 T5 ein Laserbearbeitungsverfahren zur Ausbildung eines Durchstichs durch Bestrahlen eines Werkstückes mit einem Laserstrahl und Schneiden des Werkstückes ausgehend von dem Durchstich bekannt. Das Verfahren umfasst einen ersten Durchstechvorgang zur Ausbildung des Durchstichs als Sackloch, das sich von einer oberen Oberfläche zu einem zentralen Bereich des Werkstückes erstreckt, einen Kühlvorgang zum Kühlen des Werkstückes, einen zweiten Durchstechvorgang, um den Durchstich bis zu einer unteren Oberfläche des Werkstückes durchzustechen, und einen Schneidvorgang zum Schneiden des Werkstückes. Die Prozesseffizienz ist jedoch nicht optimal, da die Dauer des Einstechvorgangs und damit die Prozesseffizienz zum Beispiel von Eigenschaften des Werkstücks abhängen. Insbesondere können Werkstücke derselben Art Fertigungstoleranzen aufweisen, die die Dauer des Einstechvorgangs und damit die Prozesseffizienz beeinflussen.

EP 1 977 850 A1 zeigt eine Bearbeitungseinrichtung mit wenigstens einem Bearbeitungskopf, der zur Bereitstellung wenigstens eines hochenergetischen Bearbeitungsstrahls, insbesondere eines Elektronen- oder Laserstrahls, ausgebildet ist.

WO 2015/039741 A1 beschreibt ein Verfahren zum Messen der Eindringtiefe eines Laserstrahls in ein Werkstück, wobei der Laserstrahl mit Hilfe einer in einem Bearbeitungskopf angeordneten Fokussieroptik in einem Brennfleck fokussiert wird.

EP 2 479 533 A1 zeigt ein Lasersystem, um in Echtzeit die Änderung der Laserschmelztiefe zu messen.

DE 10 2013 225 108 A1 zeigt ein Messverfahren, bei dem ein Messstrahl während einer mittels eines Bearbeitungsstrahls erfolgenden Bearbeitung eines Werkstücks emittiert, zu einem Bearbeitungsort geleitet und anschließend mittels Interferometrie ausgewertet wird.

### Offenbarung der Erfindung

Es ist eine Aufgabe der vorliegenden Offenbarung, ein Verfahren zur Laserbearbeitung und ein Laserbearbeitungssystem zur Durchführung des Verfahrens anzugeben, die eine Effizienz eines Einstechvorgangs verbessern können. Insbesondere ist es eine Aufgabe der vorliegenden Offenbarung, eine Zeit für einen Einstechvorgang in ein Werkstück, der einem Schneidprozess vorgelagert ist, zu verkürzen.

Diese Aufgabe wird durch ein Verfahren nach Anspruch 1 sowie durch ein Laserbearbeitungssystem nach Anspruch 14 gelöst. Vorteilhafte Ausgestaltungen der Erfindung sind in den Unteransprüchen angegeben.

Das Verfahren umfasst: Einstechen eines Einstechlochs mittels eines Laserstrahls in ein Werkstück, Messen einer Einstechtiefe des Einstechlochs mittels wenigstens eines optischen Messstrahls während des Einstechvorgangs und Einstellen wenigstens eines Prozessparameters des Laserbearbeitungssystems während des Einstechvorgangs basierend auf einer aktuell gemessenen Einstechtiefe. Das Verfahren kann die Aspekte der Vorrichtung für ein Laserbearbeitungssystem gemäß der vorliegenden Offenbarung implementieren.

Eine Vorrichtung für ein Laserbearbeitungssystem, insbesondere einen Laserschneidkopf, umfasst eine optische Messeinrichtung, die eingerichtet ist, um während eines Einstechvorgangs unter Verwendung wenigstens eines optischen Messstrahls eine aktuelle bzw. momentane Einstechtiefe eines mit einem Laserstrahl in einem Werkstück erzeugten Einstechlochs zu bestimmen, und eine Steuereinrichtung, die eingerichtet ist, um wenigstens einen Prozessparameter des Laserbearbeitungssystems während des Einstechvorgangs basierend auf der aktuellen Einstechtiefe einzustellen.

Erfindungsgemäß kann die Einstechtiefe zu jedem Zeitpunkt des Einstechvorgangs bekannt sein. Der wenigstens eine Prozessparameter des Laserbearbeitungssystems kann basierend auf der aktuellen Einstechtiefe gezielt eingestellt bzw. geregelt werden. Damit kann eine Inline-Regelung des Einstechprozesses (und z.B. einer Durchsticherkennung) erfolgen, wodurch die Dauer des Einstechprozesses minimiert, die Qualität des Einstechlochs optimiert und/oder die Prozessstabilität maximiert werden kann. Beispielsweise kann die Qualität des Einstechlochs durch die Menge und die Ausprägung des Materialaufwurfs, der sich auf der Werkstückoberseite ablagert, und/oder durch den Durchmesser des Einstechlochs entlang der Ausbreitungsrichtung bestimmt sein. Durch die Inline-Regelung können einer oder mehrere Prozessparameter derart eingestellt werden, dass die Menge und die Ausprägung des Materialaufwurfs und/oder der Durchmesser des Einstechlochs vorbestimmte Qualitätskriterien erfüllen.

Vorzugsweise ist die optische Messeinrichtung eingerichtet, um während des Einstechvorgangs die Einstechtiefe fortlaufend bzw. kontinuierlich zu messen. Die Steuereinrichtung kann eingerichtet sein, um den wenigstens einen Prozessparameter basierend auf der kontinuierlich gemessenen Einstechtiefe während des Einstechvorgangs fortlaufend bzw. kontinuierlich einzustellen oder zu regeln. Hierbei kann eine zeitlich aufgelöste kontinuierliche Messung der Einstechtiefe über eine Zeitspanne oder über eine gesamte Dauer des Einstechvorgangs erfolgen. Ebenso kann eine Einstellung oder Regelung des wenigstens einen Prozessparameters entsprechend über die Zeitspanne oder über die gesamte Dauer des Einstechvorgangs erfolgen.

Die Vorrichtung, wie beispielsweise die optische Messeinrichtung oder die Steuereinrichtung, ist eingerichtet, um eine Änderungsrate *ds*/*dt* der Einstechtiefe *s(t),* also eine Einstechtiefenänderung, zu bestimmen. Die Steuereinrichtung ist eingerichtet, um den wenigstens einen Prozessparameter basierend auf der Änderungsrate *ds*/*dt* der Einstechtiefe *s(t)* einzustellen. Durch die Bestimmung oder Aufzeichnung der Änderungsrate *ds*/*dt* kann die Effizienz des Einstechprozesses analysiert werden, beispielsweise hinsichtlich des aktuellen Materialaustriebs.

Die Dauer des Einstechprozesses, die als die Zeitspanne zwischen der Aktivierung des Laserstrahls und dem Durchstich durch das Werkstück definiert sein kann, kann von der Änderungsrate *ds*/*dt* der Einstechtiefe abhängen. Beispielsweise kann die Änderungsrate *ds*/*dt* der Einstechtiefe *s(t)* mit zunehmender Tiefe des Einstechlochs abnehmen. Dies kann in der abnehmenden einkoppelbaren Intensität des Laserstrahls am Einstechgrund mit zunehmender Einstechtiefe *s(t)* begründet sein. Weiterhin kann die Änderungsrate *ds*/*dt* der Einstechtiefe *s(t)* direkt die Prozesseffizienz widerspiegeln. Gemäß der vorliegenden Erfindung sind die aktuelle Einstechtiefe *s(t)* und auch die Änderungsrate *ds*/*dt* zu jedem Zeitpunkt während des Einstechvorgangs bekannt, wodurch ein oder mehrere Prozessparameter des Laserbearbeitungssystems gezielter angepasst und geregelt werden können.

Vorzugsweise ist die Steuereinrichtung weiter eingerichtet, um die Änderungsrate *ds*/*dt* der Einstechtiefe *s(t)* mit einem (z.B. vorbestimmten) Schwellwert zu vergleichen, und um basierend auf dem Vergleich zu bestimmen, ob ein Durchstechen des Werkstücks mit den aktuell eingestellten Prozessparametern möglich ist oder nicht. Der Schwellwert kann insbesondere angeben, ab wann eine Materialdurchdringung mit den aktuellen Prozessparametern nicht mehr möglich ist.

In einigen Ausführungsformen kann die Steuereinrichtung eingerichtet sein, um den Einstechvorgang abzubrechen oder den wenigstens einen Prozessparameter auf wenigstens einen vordefinierten Wert einzustellen, wenn bestimmt wird, dass ein Durchstechen des Werkstücks mit den aktuell eingestellten Prozessparametern nicht möglich ist. Erreicht die Änderungsrate *ds*/*dt* den definierten Schwellwert, kann zum Beispiel auf einen Regelalgorithmus, der auf diesen Fall ausgelegt ist, zurückgegriffen werden. Alternativ kann der Einstechprozess abgebrochen und/oder eine Fehlermeldung an den Bediener ausgegeben werden. Nach dem Abbruch des Einstechprozesses kann der Einstechprozess automatisch an einer anderen Position auf dem Werkstück erneut gestartet werden.

Vorzugsweise ist die Vorrichtung weiter eingerichtet, um ein Durchstechen des Laserstrahls durch das Werkstück zu erkennen. Beispielsweise kann das Durchstechen erkannt werden, wenn die optische Messeinrichtung keinen vom Grund bzw. Boden des Einstechlochs reflektierten optischen Messstrahl mehr empfängt. Das Durchstechen kann auch basierend auf der Änderungsrate *ds*/*dt* bestimmt bzw. erkannt werden.

Vorzugsweise ist die Steuereinrichtung eingerichtet, um nach dem Erkennen des Durchstechens einen Laserschneidvorgang am Werkstück durchzuführen. Beispielsweise kann der Zeitpunkt des Durchstechens an die Steuerungseinheit kommuniziert und der anschließende Schneidprozess direkt und ohne Verzögerung gestartet werden. Für den Schneidprozess kann der Laserschneidkopf entlang des Werkstücks bewegt werden, um eine Schneidkontur zu bilden.

Vorzugsweise ist die Steuereinrichtung eingerichtet, um basierend auf einer Einstechtiefe zu einem Zeitpunkt eines Durchstechens des Laserstrahls durch das Werkstück eine Dicke bzw. Materialstärke des Werkstücks zu bestimmen. Diese Information kann beispielsweise an die Steuerungseinheit kommuniziert werden. Die Steuerungseinheit kann darauf basierend die korrekten Prozessparameter, die zum Beispiel materialstärkenabhängig sein können, für den anschließenden Schneidprozess automatisiert auswählen. Ergänzend oder alternativ kann die Information verwendet werden, um einen (z.B. automatisierten) Abgleich zwischen der Soll-Materialstärke und der Ist-Materialstärke durchzuführen. Falls eine Abweichung besteht, kann zum Beispiel eine Fehlermeldung an den Maschinenbediener bzw. an die Maschinensteuerung ausgegeben werden, um frühzeitig auf die Abweichung in der Materialstärke reagieren zu können.

Vorzugsweise ist die Steuereinrichtung eingerichtet, um den wenigstens einen Prozessparameter während des Einstechprozesses diskret, kontinuierlich, oder kombiniert diskret und kontinuierlich einzustellen. Beispielsweise können für die Einstechtiefe oder Änderungsrate *ds*/*dt* mehrere Wertebereiche festgelegt werden, wobei jedem der mehreren Wertebereiche ein jeweiliger diskreter Prozessparameter zugeordnet ist. In einem weiteren Beispiel kann der wenigstens eine Prozessparameter kontinuierlich in Abhängigkeit der aktuellen Einstechtiefe oder Änderungsrate *ds*/*dt* eingestellt werden. In einem noch weiteren Beispiel kann über die Dauer des Einstechprozesses eine kombinierte diskrete und kontinuierliche Einstellung erfolgen. Zum Beispiel kann für wenigstens einen ersten Wertebereich der Einstechtiefe oder Änderungsrate *ds*/*dt* eine diskrete Einstellung und für wenigstens einen zweiten Wertebereich der Einstechtiefe oder Änderungsrate *ds*/*dt,* der vom wenigstens einen ersten Wertebereich verschieden ist, eine kontinuierliche Einstellung erfolgen.

Vorzugsweise ist der wenigstens eine Prozessparameter des Laserbearbeitungssystems aus der Gruppe ausgewählt, die wenigstens einen Pulsparameter, eine Laserleistung, eine Fokuslage des Laserstrahls, einen Fokusdurchmesser des Laserstrahls, eine Prozessgaszusammensetzung, einen Prozessgasdruck und einen Düsenabstand zwischen einer Düse des Laserbearbeitungssystems und einer Oberfläche des Werkstücks umfasst. Der wenigstens eine Pulsparameter kann aus der Gruppe ausgewählt sein, die eine Pulslänge, eine Pulsperiodendauer und eine Pulsspitzenleistung umfasst. Weitere Pulsparameter können sich aus den genannten Pulsparametern ergeben.

Beim Schneiden metallischer Materialien mittels Laserstrahlung kann üblicherweise gemeinsam mit dem Laserstrahl ein Prozessgas aus dem Schneidkopf auf das Werkstück gerichtet werden. Zu diesem Zweck kann an einem Laserbearbeitungskopf des Laserbearbeitungssystems eine Schneiddüse angebracht sein, durch die Laserstrahlung und Prozessgas auf ein zu bearbeitendes Werkstück gerichtet werden. Das Prozessgas kann ein inertes Medium (z.B. Stickstoff N₂) oder ein reaktives Gas (z.B. Sauerstoff Oz) sein. Der wenigstens eine Prozessparameter kann eine Zusammensetzung des Prozessgases und/oder einen Druck des Prozessgases umfassen. Durch das gezielte Einstellen der Zusammensetzung und/oder des Drucks des Prozessgases kann eine Qualität des Einstechvorgangs verbessert und eine Dauer des Einstechvorgangs reduziert werden.

Vorzugsweise umfasst oder ist die optische Messeinrichtung ein Kohärenz-Interferometer, und insbesondere ein Kurzkohärenz-Interferometer. Das Kohärenz-Interferometer (optischer Kohärenztomograph, OCT) kann verwendet werden, um verschiedene Prozessparameter zu messen, wie beispielsweise die Einstechtiefe beim Einstechvorgang, den Abstand zum Werkstück beim Laserschneiden und/oder eine Oberflächentopographie.

Vorzugsweise ist die Vorrichtung eingerichtet, um den Einstechvorgang bei einem im Wesentlichen konstanten Abstand zwischen dem Laserbearbeitungskopf bzw. einer Düse des Laserbearbeitungssystems und einer Oberfläche des Werkstücks durchzuführen. Die Düse kann eine Schneiddüse sein, aus der der Laserstrahl und optional ein Prozessgas austritt. Die optische Messeinrichtung kann eingerichtet sein, um die aktuelle Einstechtiefe basierend auf dem Abstand und einem aktuellen Messwert an der Einstechposition zu bestimmen. Der Abstand kann einen vor Beginn des Einstechvorgangs ermittelten Anfangsmesswert umfassen. Die optische Messeinrichtung kann eingerichtet sein, den Anfangsmesswert zu ermitteln. Beispielsweise kann die optische Messeinrichtung vor dem Beginn des Einstechvorgangs zum Ermitteln des Anfangsmesswerts eine Kalibriermessung (z.B. eine Abstandsmessung mit dem Kohärenz-Interferometer) durchführen, sobald die Schneidoptik ihre X-Y-Z-Endposition für den Einstechprozess erreicht hat. Alternativ kann der Abstand zwischen dem Laserbearbeitungskopfbzw. der Düse und der Werkstückoberfläche bekannt sein oder basierend auf einem Stellsignal der Steuereinheit zum Einstellen des Abstands ermittelt werden. Unter Verwendung des Abstands und des aktuellen Messsignals während des Einstechens kann die aktuelle Einstechtiefe *s(t)* ermittelt werden. Das aktuelle Messsignal kann beispielsweise einen Reflex des optischen Messstrahls an der Einstechposition umfassen. Die optische Messeinrichtung kann eingerichtet sein, das aktuelle Messsignal in einen aktuellen Messwert umzuwandeln. Der aktuelle Messwert kann einem Abstand an der Einstechposition entsprechen.

Vorzugsweise ist die Vorrichtung alternativ oder zusätzlich eingerichtet, um den Einstechvorgang bei einem sich zeitlich ändernden Abstand zwischen dem Laserbearbeitungskopf bzw. der Düse des Laserbearbeitungssystems und der Oberfläche des Werkstücks durchzuführen. Anders gesagt kann der Abstand während des Einstechprozesses, z.B. dynamisch, variiert werden. Die aktuelle Einstechtiefe kann basierend auf einem aktuellen Abstand bezüglich der Werkstückoberfläche und einem entsprechenden aktuellen Messwert der optischen Messeinrichtung an der Einstechposition bestimmt werden. Mit anderen Worten kann der aktuelle Abstand und der entsprechende aktuelle Messwert gleichzeitig bestimmt werden. Der aktuelle Abstand kann dabei entweder gemessen werden, oder basierend auf einem aktuellen Stellwert zum Einstellen des aktuellen Düsenabstands bestimmt werden. Beispielsweise kann die optische Messeinrichtung eingerichtet sein, den aktuellen Abstand zu ermitteln.

In einer Ausführungsform kann zusätzlich zur optischen Messeinrichtung, die beispielsweise ein Kurzkohärenz-Interferometer umfasst, eine Abstandssensoreinheit verwendet werden, die den Abstand zwischen der Düsenspitze und der Werkstückoberseite z.B. kapazitiv, induktiv, optisch oder auf andere Weise misst. Beide Messsignale, d.h. das Düsenabstandssignal der Abstandssensoreinheit und das entsprechende Messsignal der optischen Messeinrichtung, werden z.B. an die Steuereinheit kommuniziert, die wiederum die aktuelle bzw. momentane Einstechtiefe, z.B. mathematisch, ermitteln kann.

Alternativ oder zusätzlich kann die optische Messeinrichtung eingerichtet sein, einen ersten optischen Messstrahl auf eine Einstechposition und einen zweiten optischen Messstrahl auf die Oberfläche des Werkstücks zu richten. Die Vorrichtung kann dann eingerichtet sein, die aktuelle Einstechtiefe mittels eines ersten Reflexes des ersten optischen Messstrahls an einem Einstechgrund des Einstechlochs und eines zweiten Reflexes des zweiten optischen Messstrahls zu bestimmen. Beispielsweise kann die optische Messeinrichtung zumindest ein optisches Element umfassen, das eingerichtet ist, den optischen Messstrahl in zwei Teilstrahlen zu teilen. Der erste Teilstrahl kann auf die Einstechposition bzw. den Einstechgrund gerichtet werden. Der zweite Teilstrahl kann als weiterer Referenzwert beispielsweise auf die Werkstückoberseite gerichtet werden. Beide Teilstrahlen können miteinander oder mit einem Strahl aus einem Referenzarm der optischen Messeinrichtung überlagert werden, um die absolute aktuelle Einstechtiefe zu ermitteln. Dies ist sowohl für einen konstanten als auch für einen variablen Düsenabstand zur Werkstückoberfläche anwendbar.

Vorzugsweise ist die optische Messeinrichtung eingerichtet, um den wenigstens einen optischen Messstahl in mindestens einer Richtung senkrecht zu einer Achse des optischen Messstrahls über die Oberfläche des Werkstücks zu führen. Die optische Messeinrichtung kann eingerichtet sein, um mit dem wenigstens einen optischen Messstahl die Oberfläche des Werkstücks in zwei aufeinander senkrecht stehenden Richtungen abzutasten. Anders gesagt kann eine dynamische Messfleckpositionierung erfolgen. Vorzugsweise ist die optische Messeinrichtung eingerichtet, um mit dem wenigstens einen optischen Messstahl eine Topographiemessung der Oberfläche des Werkstücks durchzuführen. Hierfür kann die optische Messeinrichtung Messdaten, wie beispielsweise Höhendaten bzw. Abstandsdaten, an der Einstechposition und einem die Einstechposition umgebenden Bereich der Werkstückoberfläche ermitteln.

Insbesondere kann die Vorrichtung eingerichtet sein, um eine geometrische Charakterisierung des Einstechlochs durchzuführen. Die geometrische Charakterisierung kann eine zweidimensionale oder eine dreidimensionale Charakterisierung umfassen. Die zweidimensionale Charakterisierung kann z.B. ein Durchmesser des Einstechlochs oder eine Ausdehnung von Materialanhaftungen und -aufwürfen um das Einstechloch erfassen. Die dreidimensionale Charakterisierung kann auch Höhendaten oder Höheninformationen enthalten, z.B. eine Höhe der Materialanhaftungen oder -aufwürfe, eine Lochtiefe oder Topographie der Oberfläche um und am Einstechloch. Die geometrische Charakterisierung des Einstechlochs kann direkt die Qualität (z.B. Durchmesser auf der Eintrittsseite, Materialanhaftungen, Materialaufwürfe, etc.) des Einstechprozesses bzw. des Einstechlochs widerspiegeln. Die geometrische Charakterisierung ermöglicht zum Beispiel eine Aussage über den Durchmesser des Einstechlochs an der Eintrittsseite (Werkstückoberseite). Die Kenntnis des Durchmessers ermöglicht wiederum einen Soll-Ist-Abgleich zwischen dem Durchmesser und der zu erwartenden Schnittspaltbreite, die z.B. durch vorherige Versuche ermittelt werden kann. Eine Bestimmung des Durchmessers und/oder ein Vergleich des Durchmessers des Einstechlochs mit einem vorgegebenen Wert kann zwischen dem eigentlichen Einstechen und dem Konturschnitt erfolgen. Ist der Durchmesser des Einstechlochs kleiner als die zu erwartende Schnittspaltbreite der Kontur oder ist gleich groß, kann der Einstechprozess direkt auf der Kontur erfolgen. Das heißt, wenn der Durchmesser des Einstechlochs kleiner als die zu erwartende Schnittspaltbreite der Kontur oder gleich groß ist, kann der Konturschnitt direkt auf der Einstechposition beginnen.

Vorzugsweise führt die optische Messeinrichtung den wenigstens einen optischen Messstahl während des Einstechvorgangs und/oder nach dem Einstechvorgang dynamisch über die Oberfläche des Werkstücks. Anders gesagt kann die geometrische Charakterisierung während (In-Prozess/Inline) und/oder nach (Post-Prozess) dem Einstechprozess in das Werkstück erfolgen.

Vorzugsweise ist die Steuervorrichtung eingerichtet, um basierend auf der geometrischen Charakterisierung des Einstechlochs wenigstens einen Prozessparameter für einen nachfolgenden Einstechvorgang einzustellen. Insbesondere ermöglicht die geometrische Charakterisierung des Einstechlochs die Optimierung von nachfolgenden Einstechprozessen, um die Einstechlöcher der nachfolgenden Einstechprozesse durch Anpassung der Prozessparameter beispielsweise basierend auf einem selbstlernenden System (Machine Learning) qualitativ zu verbessern. Ergänzend oder alternativ kann die Qualitätsinformation an den Maschinenbediener z.B. mittels einer HMI-Schnittstelle mitgeteilt werden. Dem Bediener wird somit die Möglichkeit gegeben, bei Bedarf in den laufenden Prozess einzugreifen und Korrekturmaßnahmen wie beispielsweise eine Strahlzentrierung, Überprüfung der Düse auf Beschädigungen oder Ähnliches vorzunehmen.

Vorzugsweise ist die Vorrichtung, und insbesondere die optische Messeinrichtung oder die Steuereinrichtung, eingerichtet, um einen Durchmesser des Einstechlochs zu bestimmen. Die Steuereinrichtung kann eingerichtet sein, um den Durchmesser mit einem (z.B. vorbestimmten) Schwellwert zu vergleichen. Die Steuereinrichtung kann das Laserbearbeitungssystem nach einem Durchstechen des Laserstrahls durch das Werkstück und vor dem Beginn eines Schneidvorgangs derart an steuern, dass der Laserstrahl den Durchmesser des Einstechlochs vergrößert, wenn bestimmt wird, dass der Durchmesser gleich oder kleiner als der Schwellwert ist. Durch Kenntnis des Durchmessers kann zum Beispiel geometrisch bewertet werden, ob ein schneidfähiges Einstechloch vorliegt oder nicht. Falls erforderlich, kann das Einstechloch vor dem eigentlichen Schneidprozess gezielt auf einen Soll-Durchmesser an der Strahleintrittsstelle und entlang des Einstechlochs vergrößert werden, um die Energieeinkopplung für den Schneidprozess zu begünstigen. Damit kann die Prozesssicherheit erhöht werden.

Gemäß einem weiteren Aspekt der vorliegenden Erfindung ist ein Laserbearbeitungssystem nach Anspruch 14 angegeben. Das Laserbearbeitungssystem umfasst einen Bearbeitungskopf mit einer Laservorrichtung, die eingerichtet ist, um den Laserstrahl auf einen Bearbeitungsbereich eines Werkstücks zu lenken, und die zuvor beschriebene Vorrichtung.

Der Laserbearbeitungskopf kann ein oder mehrere optische Elemente aufweisen. Hierbei können alle optischen Elemente des Laserbearbeitungskopfes reflektive Optiken sein. Alternativ können alle optischen Elemente des Laserbearbeitungskopfes transmissive Optiken sein oder die optischen Elemente können sowohl transmissive als auch reflektive Optiken umfassen. Vorzugsweise umfasst der Laserbearbeitungskopf zumindest ein optisches Element, das bezüglich einer optischen Achse verschiebbar ist, um eine Fokuslage des Laserstrahls und/oder eine Fokuslage des wenigstens einen optischen Messstrahls einzustellen. Das zumindest eine optische Element kann transmissive und/oder reflektive Optiken umfassen, und kann beispielsweise eine Linse, eine Linsengruppe, eine Zoomoptik, eine Spiegeloptik oder ähnliches umfassen oder sein. Das zumindest eine optische Element kann aus der Gruppe ausgewählt sein, die eine Kollimator-Optik für den Laserstrahl, eine Kollimator-Optik für den wenigstens einen optischen Messstrahl und eine Fokussier-Optik umfasst oder daraus besteht. Die Fokussier-Optik kann eine gemeinsame Fokussieroptik für den Laserstrahl und den wenigstens einen optischen Messtrahl sein. Diese Optiken können eine Linse oder eine Linsengruppe sein oder umfassen.

Vorzugsweise ist das Laserbearbeitungssystem für die Bearbeitung von Werkstücken mit einer Dicke von wenigstens 10mm, und insbesondere von wenigstens 15mm eingerichtet. Die Ausführungsformen der vorliegenden Offenbarung können für alle Materialstärken verwendet werden, und sind insbesondere für das Einstechen in größeren Materialstärken (≥ 10 mm) vorteilhaft. Bei größeren Materialstärken kann der Einstechprozess z.B. mehrere Sekunden dauern und somit einen großen zeitlichen Anteil am eigentlichen Schneidprozesses aufweisen. Durch das Verkürzen der Dauer des Einstechvorgangs kann die Gesamtdauer des Bearbeitungsprozesses reduziert und damit die Prozesseffizienz erhöht werden.

### Kurze Beschreibung der Zeichnungen

Ausführungsbeispiele der Offenbarung sind in den Figuren dargestellt und werden im Folgenden näher beschrieben. Es zeigen:
Figur 1 ein Laserbearbeitungssystem gemäß Ausführungsformen der vorliegender Erfindung,
Figur 2 ein Laserbearbeitungssystem gemäß weiteren Ausführungsformen der vorliegender Erfindung,
Figur 3 ein Laserbearbeitungssystem gemäß weiteren Ausführungsformen der vorliegenden Erfindung,
Figur 4 ein Laserbearbeitungssystem gemäß weiteren Ausführungsformen der vorliegenden Erfindung,
Figur 5 ein Laserbearbeitungssystem gemäß weiteren Ausführungsformen der vorliegenden Erfindung,
Figuren 6A und B schematische Darstellung des Einstechprozesses und der Bestimmung einer Einstechtiefe gemäß Beispielen, die nicht Gegenstand der Erfindung sind,
Figur 7(a) bis 7(c) qualitative Verläufe einer Einstechtiefe und von Änderungsraten einer Einstechtiefe gemäß Ausführungsformen der vorliegenden Erfindung,
Figur 8 qualitative Verläufe von Prozessparametern des Laserbearbeitungssystems gemäß Ausführungsformen der vorliegenden Erfindung, und
Figur 9(a) und 9(b) Messfleckpositionierungen für eine geometrische Charakterisierung gemäß Ausführungsformen der vorliegenden Erfindung.

### Ausführungsformen der Erfindung

Im Folgenden werden, sofern nicht anders vermerkt, für gleiche und gleichwirkende Elemente gleiche Bezugszeichen verwendet.

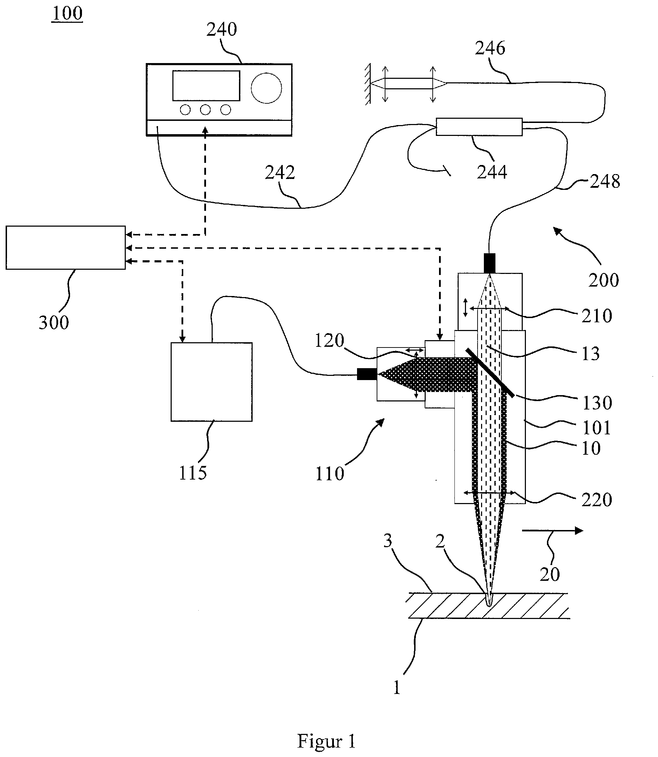

Figur 1 zeigt eine schematische Darstellung eines Laserbearbeitungssystems 100 gemäß Ausführungsformen der vorliegenden Erfindung. Das Laserbearbeitungssystem 100 kann einen Laserschneidkopf 101 umfassen.

Das Laserbearbeitungssystem 100 umfasst eine Laservorrichtung 110 zum Bereitstellen eines Laserstrahls 10 (auch als "Bearbeitungsstrahl" oder "Bearbeitungslaserstrahl" bezeichnet) und die Vorrichtung gemäß den hier beschriebenen Ausführungsformen. Die Vorrichtung umfasst eine optische Messeinrichtung 200, die eingerichtet ist, um während eines Einstechvorgangs unter Verwendung wenigstens eines optischen Messstrahls 13 eine Einstechtiefe eines mit dem Laserstrahl 10 in einem Werkstück 1 erzeugten Einstechlochs 2 zu bestimmen. Die Vorrichtung umfasst weiter eine Steuereinrichtung 300, die eingerichtet ist, um wenigstens einen Prozessparameter des Laserbearbeitungssystems 100 während des Einstechvorgangs basierend auf einer aktuell gemessenen Einstechtiefe einzustellen.

Die Laservorrichtung 110, die durch eine Lasersteuervorrichtung 115 gesteuert werden kann, ist eingerichtet, um den Laserstrahl 10 auf einen Bearbeitungsbereich des Werkstücks 1 zu lenken. Die Laservorrichtung 110 kann eine Kollimatorlinse 120 zur Kollimation des Laserstrahls 10 aufweisen. Innerhalb des Laserschweißkopfes 101 wird der Laserstrahl 10 durch eine geeignete Optik, wie zum Beispiel ein Strahlumlenker 130, um etwa 90° in Richtung des Werkstücks 1 abgelenkt.

In einigen Ausführungsformen können der Laserstrahl 10 und der wenigstens eine optische Messstrahl 13 zumindest streckenweise koaxial sein, und können insbesondere zumindest streckenweise koaxial überlagert sein. Zum Beispiel können der Laserstrahl 10 und der wenigstens eine optische Messstrahl 13 durch den Strahlumlenker 130 im Wesentlichen koaxial durch die Schneidoptik in die Bearbeitungszone geführt werden. Die Zusammenführung des optischen Messstrahls 13 und des Laserstrahls 10 kann nach der Kollimator-Optik 210 und vor einer Fokussier-Optik 220 erfolgen. Vorzugsweise ist der Strahlumlenker 130 reflektierend für die Wellenlänge des Laserstrahls 10 und transmittierend für die Wellenlänge des wenigstens einen optischen Messstrahls 13.

Die optische Messeinrichtung 200 kann ein Kohärenz-Interferometer bzw. einen Kohärenztomograph umfassen oder kann ein Kohärenz-Interferometer bzw. Kohärenztomograph sein. Der Kohärenztomograph umfasst typischerweise eine Kollimator-Optik 210, die eingerichtet ist, um den wenigsten einen optischen Messstrahl 13 zu kollimieren, und die Fokussier-Optik 220, die eingerichtet ist, um den wenigstens einen optischen Messstrahl 13 auf das Werkstück 1 zu fokussieren. Die Fokussier-Optik 220 kann eine gemeinsame Fokussier-Optik, wie beispielsweise eine Fokuslinse, für den Laserstrahl 10 und den wenigstens einen optischen Messstrahl 13 sein.

In typischen Ausführungsformen sind die Kollimator-Optik 210 und die Fokussier-Optik 220 in den Schneidkopf 101 integriert. Beispielsweise kann der Schneidkopf 101 ein Kollimatormodul umfassen, das in den Schneidkopf 101 integriert oder am Schneidkopf 101 montiert ist.

Das hier beschriebene Prinzip zur Messung der Einstechtiefe kann auf dem Prinzip der optischen Kohärenztomographie basieren, die sich unter Zuhilfenahme eines Interferometers die Kohärenzeigenschaften von Licht zunutze macht. Der Kohärenztomograph kann eine Auswerteeinheit 240 mit einer breitbandigen Lichtquelle (z.B. einer Superlumineszenzdiode, SLD) umfassen, die das Messlicht in einen Lichtwellenleiter 242 koppelt. In einem Strahlteiler 244, der vorzugsweise einen Faserkoppler aufweist, wird das Messlicht in einen Referenzarm 246 und einen Messarm aufgespalten, der über einen Lichtwellenleiter 248 in den Schneidkopf 101 führt.

Die Kollimator-Optik 210 dient dazu, das aus dem Lichtwellenleiter 248 austretende Messlicht (optischer Messstrahl 13) zu kollimieren. Gemäß einigen Ausführungsformen kann der wenigstens eine optische Messstrahl 13 im Schneidkopf 101 mit dem Laserstrahl 10 koaxial überlagert werden kann. Anschließend können der Laserstrahl 10 und der wenigstens eine optische Messstrahl 13 durch die Fokussier-Optik 220, die eine gemeinsame Linse oder Fokussierlinse sein kann, auf das Werkstück 1 fokussiert werden.

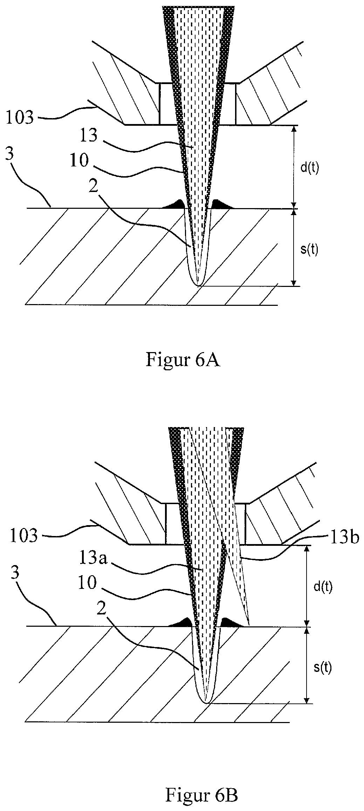

Der wenigstens eine optische Messstrahl 13 kann in das Einstechloch im Werkstück 1 gelenkt werden. Das aus dem Einstechloch, und insbesondere vom Boden des Einstechlochs zurückreflektierte Messlicht wird durch die Fokussier-Optik 220 auf die Austritts-/Eintrittsfläche des Lichtwellenleiters 248 abgebildet, im Faserkoppler 244 mit dem zurückreflektierten Licht aus dem Referenzarm 246 überlagert und anschließend zurück in die Auswerteeinheit 240 gelenkt. Das überlagerte Licht enthält Informationen über den Weglängenunterschied zwischen dem Referenzarm 246 und dem Messarm. Diese Informationen werden in der Auswerteeinheit 240 basierend auf Kohärenz-Interferometrie bzw. Kurzkohärenz-Interferometrie ausgewertet, wodurch der Benutzer Informationen über den Abstand zwischen dem Boden des Einstechlochs und einer Referenz, beispielsweise dem Schneidkopf 101, erhält. Die Bestimmung der Einstechtiefe ist später unter Bezugnahme auf die Figuren 6A und B näher erläutert.

Um die gesamte Einstechtiefe, insbesondere im dicken Materialbereich, inline, d.h. in Echtzeit, messen zu können, ist in einigen Ausführungsformen ein Nachführen des Messbereichs des Interferometers während des Einstechprozesses vorgesehen. Hierfür kann beispielsweise die Länge des Referenzarms 246 dynamisch verfahren bzw. verstellt werden. Alternativ kann der Referenzarm 246 mehrere Referenzstufen umfassen, die den verschiedenen Messbereichen entsprechen.

Das Laserbearbeitungssystem 100 kann für den Laserstrahl 10 und/oder für den wenigstens einen optischen Messstrahl 13 zumindest ein optisches Element umfassen, das eingerichtet ist, um die Fokuslage des Laserstrahls 10 bzw. des wenigstens einen optischen Messstrahls 13 einzustellen. Das zumindest eine optische Element kann im divergierenden Bereich des jeweiligen Strahls entlang der optischen Achsen verschiebbar sein, um die Fokuslagen zu verändern. In der Figur 1 sind beispielhaft die Kollimatorlinse 120 und die Kollimator-Optik 210 entlang der jeweiligen optischen Achse verschiebbar dargestellt. Hier können die Fokuslagen des Laserstrahls 10 und des wenigstens einen optischen Messstrahls 13 gemeinsam oder unabhängig voneinander verändert werden.

Die Verstellung/Verschiebung der optischen Elemente bezüglich der optischen Achse zur Fokuslagenänderung beider Strahlen kann motorisch, manuell oder durch eine Kombination aus motorisch und manuell erfolgen. Beispielsweise kann die Fokuslage des Laserstrahls 10 motorisch verstellbar und die Fokuslage des wenigstens einen optischen Messstrahls 13 manuell verstellbar sein.

Die Steuereinrichtung 300 ist eingerichtet, um wenigstens einen Prozessparameter des Laserbearbeitungssystems 100 während des Einstechvorgangs basierend auf einer durch die optische Messeinrichtung 200 aktuell gemessenen Einstechtiefe einzustellen. Die Steuereinrichtung 300 kann mit zumindest einem von der Laservorrichtung, der Laseroptik, der Laserquelle und dem Messsystem kommunizieren, um den Einstechprozess Regeln zu können. Die Steuereinrichtung 300 kann zum Beispiel mit der Lasersteuervorrichtung 115 verbunden sein, um einen Pulsparameter und/oder eine Laserleistung der Laservorrichtung 110 einzustellen. Ergänzend oder alternativ kann die Steuereinrichtung 300 mit einer Laseroptik des Bearbeitungskopfs 101 verbunden sein, um beispielsweise eine Fokuslage und/oder einen Fokusdurchmesser des Laserstrahls 10 einzustellen. Insbesondere kann die Steuereinrichtung 300 Steuerbefehle für ein Verschieben der Kollimatorlinse 120 und/oder der Kollimator-Optik 210 entlang der jeweiligen optischen Achse ausgeben.

Das Laserbearbeitungssystem 100 oder Teile davon, wie beispielsweise der Schneidkopf 101, kann gemäß Ausführungsformen entlang einer Bearbeitungsrichtung 20 bewegbar sein. Die Bearbeitungsrichtung 20 kann eine Schneidrichtung bezüglich des Werkstücks 1 sein. Insbesondere kann die Bearbeitungsrichtung 20 eine horizontale Richtung sein. Die Bearbeitungsrichtung 20 kann auch als "Vorschubrichtung" bezeichnet werden.

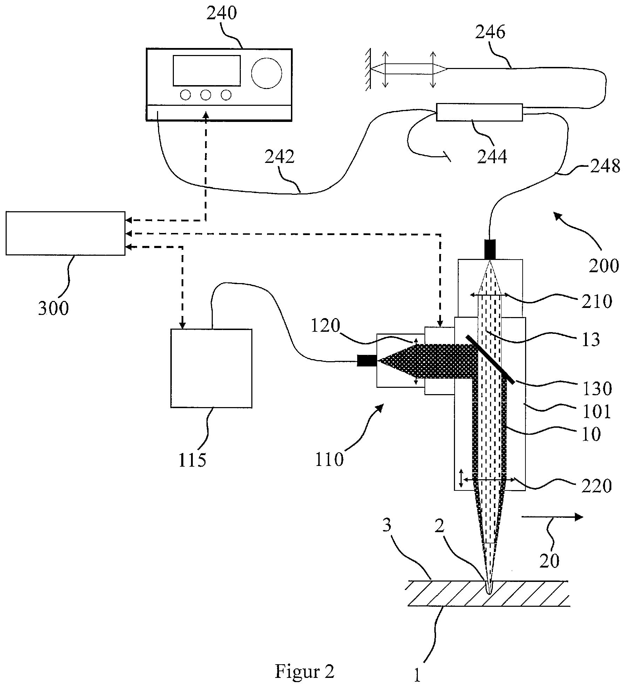

Das Laserbearbeitungssystem 100, und insbesondere der Schneidkopf 101, kann während des Einstechprozesses nicht entlang der Bearbeitungsrichtung 20 bewegt werden. Anders gesagt kann das Laserbearbeitungssystem 100, und insbesondere der Schneidkopf 101, in einer x-y-Ebene am selben Ort verbleiben. Es kann jedoch während des Einstechprozesses eine Bewegung des Schneidkopfes 101 in die (z.B. vertikale) z-Richtung erfolgen, um einen Düsenabstand zwischen einer Düse des Laserbearbeitungssystems (nicht gezeigt) und der Oberfläche 3 des Werkstücks 1 einzustellen. Figur 2 zeigt ein Laserbearbeitungssystem gemäß weiteren Ausführungsformen der vorliegenden Erfindung. Das Laserbearbeitungssystem der Figur 2 ist ähnlich zum unter Bezugnahme auf die Figur 1 beschriebenen Laserbearbeitungssystem und eine Beschreibung von ähnlichen oder identischen Elementen wird nicht wiederholt. Im Beispiel der Figur 2 ist das zumindest eine optisches Element, das eingerichtet ist, um die Fokuslage des Laserstrahls 10 bzw. des wenigstens einen optischen Messstrahls 13 einzustellen, die Fokussier-Optik 220. Insbesondere kann das zumindest eine optische Element im kollimierten Bereich der überlagerten Strahlen entlang der optischen Achse verschiebbar sein. Somit kann die Fokuslage beider Strahlen gleichzeitig verändert werden.

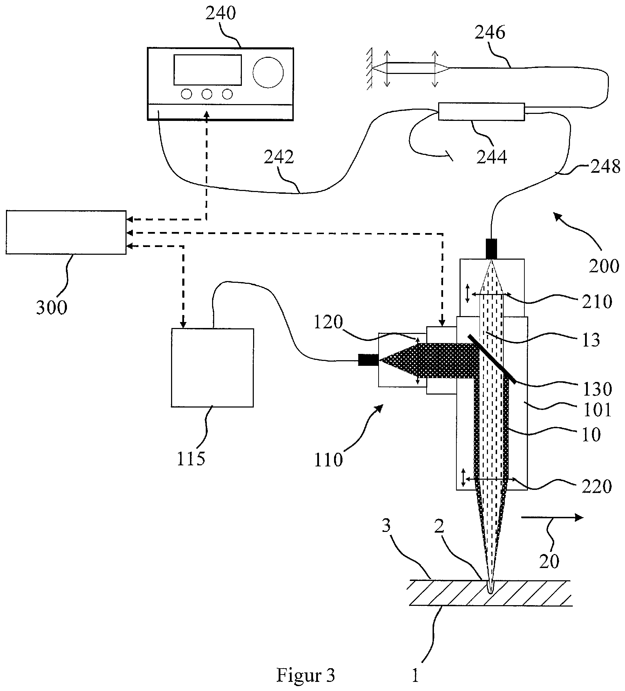

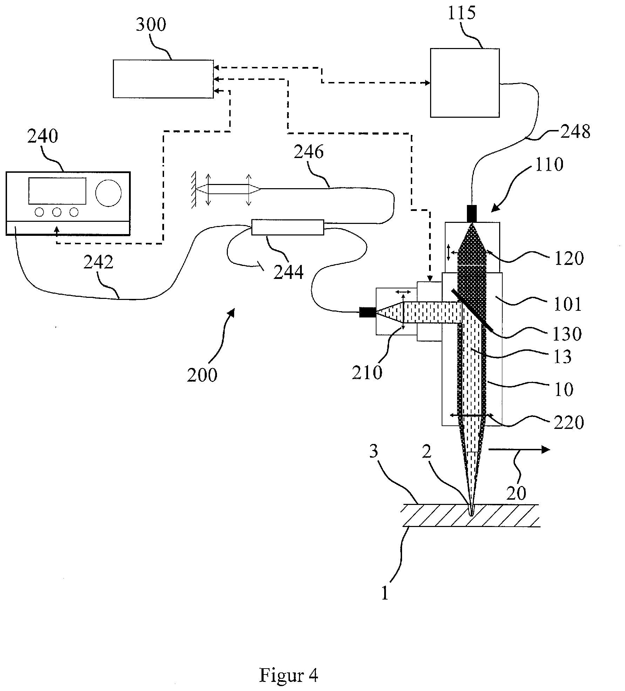

Figur 3 zeigt ein Laserbearbeitungssystem gemäß weiteren Ausführungsformen der vorliegenden Erfindung. Das Laserbearbeitungssystem der Figur 3 ist ähnlich zum unter Bezugnahme auf die Figur 1 beschriebenen Laserbearbeitungssystem und eine Beschreibung von ähnlichen oder identischen Elementen wird nicht wiederholt. Im Beispiel der Figur 3 umfasst das zumindest eine optisches Element, das eingerichtet ist, um die Fokuslage des Laserstrahls 10 bzw. des wenigstens einen optischen Messstrahls 13 einzustellen, die Kollimator-Optik 210 und die Fokussier-Optik 220. Insbesondere kann zumindest ein verschiebbares optisches Element im divergierenden Bereich des wenigstens einen Messstrahls 13 und zumindest ein weiteres verschiebbares optisches Element im kollimierten Bereich beider Strahlen vorhanden sein. Dadurch können die Fokuslagen der Strahlen unabhängig voneinander verändert werden. Figur 4 zeigt ein Laserbearbeitungssystem gemäß weiteren Ausführungsformen der vorliegenden Erfindung. Das Laserbearbeitungssystem der Figur 4 ist ähnlich zum unter Bezugnahme auf die Figur 1 beschriebenen Laserbearbeitungssystem und eine Beschreibung von ähnlichen oder identischen Elementen wird nicht wiederholt.

In Beispiel der Figur 4 ist der Laserstrahl 10 koaxial zur Schneidoptik und der wenigstens eine optische Messstrahl 13 wird seitlich eingekoppelt. Zum Beispiel kann der Strahlumlenker 130 transmittierend für den Laserstrahl 10 und reflektierend für den wenigstens einen optischen Messstrahl 13 sein. Auch in diesem Fall sind alle vorher beschriebenen Kombinationen zur Fokuslagenänderung möglich.

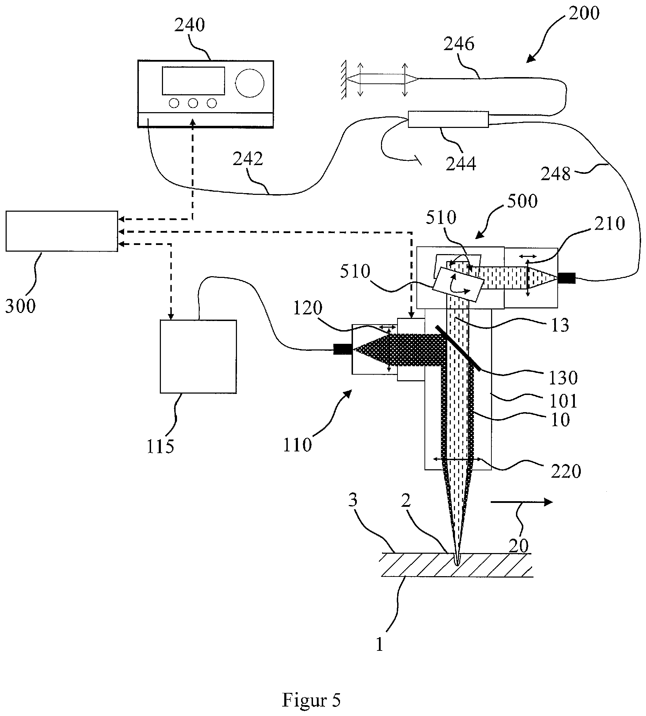

Figur 5 zeigt ein Laserbearbeitungssystem gemäß weiteren Ausführungsformen der vorliegenden Erfindung. Das Laserbearbeitungssystem der Figur 5 ist ähnlich zum unter Bezugnahme auf die Figur 1 beschriebenen Laserbearbeitungssystem und eine Beschreibung von ähnlichen oder identischen Elementen wird nicht wiederholt.

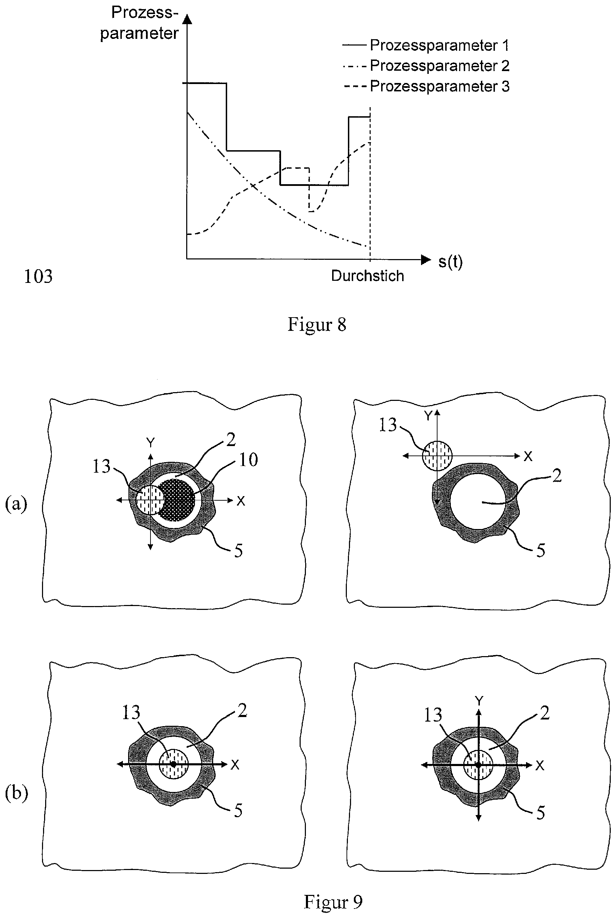

Das Laserbearbeitungssystem bzw. die Vorrichtung weist zusätzlich ein Ablenksystem 500 im Messstrahlengang auf, das eingerichtet ist, um mit dem wenigstens einen optischen Messstrahl 13 einen Bereich der Werkstückoberfläche abzutasten. Der Bereich der Werkstückoberfläche kann die Einstechposition bzw. die Bearbeitungsposition, auf die der Laserstrahl gerichtet ist, sowie einen diese Position umgebenden Bereich umfassen. Somit kann der wenigstens eine optische Messstrahl 13 dynamisch und unabhängig vom Laserstrahl 10 auf dem Werkstück 1 positioniert werden. Das Ablenksystem 500 kann beispielsweise zumindest einen reflektierenden, um mindestens eine Achse beweglichen Spiegel 510 aufweisen. Der Spiegel 510 ist vorzugsweise um zwei aufeinander senkrecht stehende Achsen beweglich. Das Ablenksystem 500 kann insbesondere ein Scanner-System sein. In Figur 5 sind zwei bewegliche Spiegel 510 dargestellt, die um zwei verschiedene aufeinander senkrecht stehende Achsen X, Y drehbar sind, um den Messfleck beliebig in einer Ebene (X-Y) zu positionieren, wie es beispielsweise in Figur 9 dargestellt ist. Für die dynamische Messfleckpositionierung sind weitere Ausführungsformen, die beispielsweise transmittierende optische Elemente umfassen oder ein Verschieben des Faserendes des Messstrahls beinhalten, möglich.

Figuren 6A und B zeigen die Bestimmung einer Einstechtiefe *s(t)* gemäß einem Beispiel, das nicht Gegenstand der Erfindung ist.

Die aktuelle Einstechtiefe *s(t)* kann unter Verwendung des wenigstens einen optischen Messstrahls 13 auf verschiedene Weisen bestimmt werden. Im Folgenden werden drei Optionen diskutiert. Die vorliegende Offenbarung ist jedoch nicht hierauf begrenzt und es können andere geeignete Methoden zur Bestimmung einer Einstechtiefe *s(t)* verwendet werden.

In einer ersten Option, unter Bezugnahme auf die Figur 6A, ist der Düsenabstand *d(t)* zwischen einer Düse 103 des Laserbearbeitungssystems und einer Oberfläche 3 des Werkstücks im Wesentlichen konstant (*d(t)*=*const*.). Die aktuelle Einstechtiefe kann basierend auf einem vor dem Beginn des Einstechvorgangs ermittelten Anfangsmesswert und einem aktuellen Messwert bestimmt werden. Zum Beispiel erfolgt vor dem Beginn des Einstechens eine Kalibriermessung (z.B. eine Abstandsmessung mit dem Interferometer). Alternativ kann der Anfangsmesswert basierend auf einem Stellwert für die Anfangsposition des Laserbearbeitungskopfes ermittelt oder von einer Steuereinheit übermittelt werden. Aus dem Messsignal, das auf einem Reflex des optischen Messstrahls basieren kann, kann die optische Messeinrichtung 200 oder die Steuereinrichtung 300 einen Messwert entsprechend einem Abstand der Düse 103 zu einem Boden des Einstechlochs ermitteln. Mit dem Anfangsmesswert und dem Messsignal an der Position des Einstechlochs kann daher die aktuelle Einstechtiefe *s(t)* während des Einstechens ermittelt werden.

In einer zweiten Option, wieder unter Bezugnahme auf die Figur 6A, ändert sich der Düsenabstand *d(t)* zwischen der Düse 103 des Laserbearbeitungssystems und der Oberfläche 3 des Werkstücks während des Einstechprozesses (*d(t)≠const.*)*.* Anders gesagt ist der Düsenabstand *d(t)* variabel. Zusätzlich zum optischen Messsystem kann eine Abstandssensoreinheit verwendet werden, die den Abstand zwischen der Düse 103 und der Werkstückoberseite 3, z.B. kapazitiv, induktiv oder optisch, misst. Beide Messsignale, also das Düsenabstandsignal der Abstandssensoreinheit und das Messsignal des optischen Messsystems 200, werden an die übergeordnete Steuereinheit 300 kommuniziert, die wiederum die aktuelle Einstechtiefe mathematisch ermitteln kann. In einer dritten Option, unter Bezugnahme auf die Figur 6B, ändert sich ebenfalls der Düsenabstand *d(t)* zwischen der Düse 103 des Laserbearbeitungssystems und der Oberfläche 3 des Werkstücks während des Einstechprozesses (*d(t)≠const.*)*.* Der wenigstens eine Messstrahl umfasst einen ersten Messstrahl 13a und einen zweiten Messstrahl 13b. Zum Beispiel kann ein anfänglicher Messstrahl im Messarm mit Hilfe zumindest eines optischen Elements in zwei Teilstrahlen geteilt werden. Der erste Teilstrahl 13a wird auf den Einstechgrund bzw. den Boden des Einstechlochs gerichtet. Der zweite Teilstrahl 13b ist als Referenzwert beispielsweise auf die Werkstückoberfläche 3 gerichtet. Beide Teilstrahlen 13a und 13b werden miteinander und/oder mit einem Strahl aus einem Referenzarm überlagert. Die Teilstrahlen 13a und 13b können geneigt zueinander auf das Werkstück treffen, wie in Figur 6B gezeigt, oder parallel und beabstandet zueinander. Alternativ kann der optische Messstrahl einen so großen Durchmesser aufweisen, dass der Messstrahl sowohl auf die Werkstückoberfläche 3 als auch auf den Einstechgrund gerichtet werden kann. Aus beiden Messsignalen von der Werkstückoberfläche 3 und dem Einstechgrund kann wiederum die absolute aktuelle Einstechtiefe *s(t)* ermittelt werden.

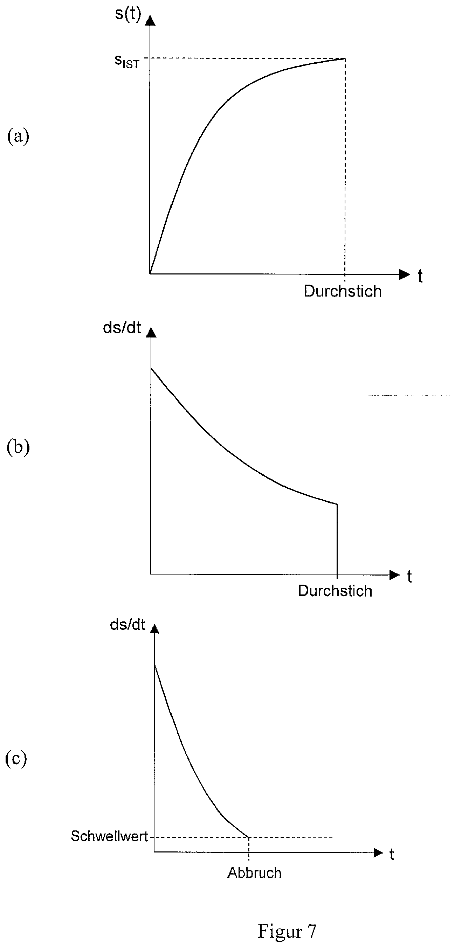

Figur 7 zeigt eine Einstechtiefe *s(t)* und Änderungsraten *ds*/*dt* einer Einstechtiefe *s(t)* gemäß Ausführungsformen der vorliegenden Erfindung.

In Figur 7(a) ist die Einstechtiefe *s(t)* als Funktion der Zeit *t* dargestellt. Beim Erreichen einer bestimmten Einstechtiefe *s(t)* erfolgt der Durchstich. Der Durchstich kann beispielsweise daran erkannt werden, dass kein Messsignal bzw. kein Reflex des Messstrahls mehr erhalten wird. Aus der Einstechtiefe *s(t)* beim Durchstich kann zum Beispiel die Dicke bzw. Materialstärke des Werkstücks abgeleitet werden. Insbesondere kann die Einstechtiefe *s(t)* beim Durchstich der Dicke bzw. Materialstärke des Werkstücks entsprechen. Nach dem Erkennen des Durchstechens kann ein Laserschneidvorgang, etwa ein Konturschnitt, am Werkstück durchgeführt werden.

In Figur 7(b) ist eine Änderungsrate *ds*/*dt* der Einstechtiefe *s(t)* als Funktion der Zeit *t* dargestellt. Wenn der Durchstich erfolgt, fällt die Änderungsrate *ds*/*dt* auf Null ab oder ist nicht mehr bestimmbar. Dies ist beispielsweise der Fall, wenn die optische Messeinrichtung keinen vom Einstechgrund reflektierten Messtrahl mehr empfängt, woraus der Durchstich erkannt werden kann.

In Figur 7(c) ist eine Änderungsrate *ds*/*dt* der Einstechtiefe *s(t)* als Funktion der Zeit *t* dargestellt. Ab einem vorgegebenen Schwellwert ist eine Materialdurchdringung mit den aktuellen Prozessparametern nicht möglich. Wird dieser Schwellwert während des Einstechens erreicht oder unterschritten, kann der Einstechprozess abgebrochen und/oder eine Fehlermeldung an den Bediener ausgegeben werden.

Figur 8 zeigt Prozessparameter des Laserbearbeitungssystems gemäß Ausführungsformen der vorliegenden Erfindung.

Gemäß der vorliegenden Offenbarung ist zu jedem Zeitpunkt *t* die aktuelle Einstechtiefe *s(t)* bekannt. Basierend auf der aktuellen Einstechtiefe *s(t)* wird wenigstens ein Prozessparameter des Einstechvorgangs inline geregelt. In Figur 8 sind qualitative Verläufe unterschiedlicher Prozessparameter in Abhängigkeit der aktuellen Einstechtiefe *s(t)* dargestellt.

Der wenigstens eine Prozessparameter des Laserbearbeitungssystems kann zum Beispiel aus der Gruppe ausgewählt sein, die wenigstens einen Pulsparameter, eine Laserleistung, eine Fokuslage des Laserstrahls, einen Fokusdurchmesser des Laserstrahls, eine Prozessgaszusammensetzung, einen Prozessgasdruck und einen Düsenabstand zwischen einer Düse des Laserbearbeitungssystems und einer Oberfläche des Werkstücks umfasst.

Es können ein, zwei oder mehr Prozessparameter während des Einstechvorgangs eingestellt werden. Die Parameterverläufe können diskreter, kontinuierlicher oder gemischter Art sein. Die Parameterverläufe können mit zunehmender Einstechtiefe steigen oder sinken. Im Beispiel der Figur 8 ändert sich der Prozessparameter 1 diskret, der Prozessparameter 2 kontinuierlich und der Prozessparameter 3 kombiniert diskret und kontinuierlich. Das Einstellen der Prozessparameter kann ebenfalls diskret, kontinuierlich oder teils diskret und teils kontinuierlich erfolgen.

Bezüglich des beispielhaften Prozessparameters 1 können für die Einstechtiefe *s(t)* und die Änderungsrate mehrere Wertebereiche festgelegt werden, wobei jedem der mehreren Wertebereiche ein jeweiliger diskreter Prozessparameter zugeordnet ist.

Bezüglich des beispielhaften Prozessparameters 2 wird dieser kontinuierlich in Abhängigkeit der aktuellen Einstechtiefe und der Änderungsrate eingestellt. Beispielsweise kann der Prozessparameter mit zunehmender Einstechtiefe kontinuierlich steigen oder sinken.

Bezüglich des beispielhaften Prozessparameters 3 erfolgt über die Dauer des Einstechprozesses eine kombinierte diskrete und kontinuierliche Einstellung. Zum Beispiel kann für wenigstens einen ersten Wertebereich der Einstechtiefe und der Änderungsrate eine diskrete Einstellung und für wenigstens einen zweiten Wertebereich der Einstechtiefe und der Änderungsrate, der vom wenigstens einen ersten Wertebereich verschieden ist, eine kontinuierliche Einstellung erfolgen.

Figur 9 zeigt Messfleckpositionierungen für eine geometrische Charakterisierung gemäß Ausführungsformen der vorliegenden Erfindung. In Figur 9(a) ist eine dynamische 2D-Messfleckpositionierung "In-Prozess" (links) und "Post-Prozess" (rechts) gezeigt. In Figur 9(b) ist eine 1D-Messfleckpositionierung (links) und 2D-Messfleckpositionierung/Kreuzscan (rechts) gezeigt. "Messfleck" bezeichnet hier den Punkt des Messstrahls auf dem Werkstück 2, an der der Messstrahl reflektiert wird, um ein Messsignal zu erhalten.

In einigen Ausführungsformen erfolgt eine geometrische Charakterisierung oder Topographiemessung des Einstechlochs, die zum Beispiel den Durchmesser des Einstechlochs und Materialanhaftungen bzw. -aufwürfe 5 des Einstechprozesses auf der Eintrittsseite widerspiegelt. Hierfür werden von der optischen Messeinrichtung Messwerte, d.h. Höhendaten, an der Position des Einstechlochs und in einem dieses umgebenden Bereich ermittelt. Die geometrische Charakterisierung kann während ("In-Prozess" oder "Inline") oder nach ("Post-Prozess") dem Einstechprozess erfolgen, wie es im Beispiel der Figur 9(a) dargestellt ist. Hierfür kann eine dynamische Messfleckpositionierung, z.B. ein Abtasten der Werkstückoberfläche 3 mittels des Messstrahls in mindestens einer Richtung, vorzugsweise in zwei aufeinander senkrecht stehende Richtungen X und Y, verwendet werden.

Für die Messfleckpositionierung kann der Messfleck 13 durch eine Ablenkeinheit, wie sie beispielhaft in der Figur 5 gezeigt ist, In-Prozess verschoben bzw. positioniert werden. Die Ablenkeinheit kann hierfür mindestens einen Spiegel umfassen, der um mindestens eine Achse senkrecht zur Strahlachse des Messstrahls beweglich bzw. schwenkbar ist. In einem anderen Beispiel kann der Messfleck 13 durch horizontales Verfahren der Laserbearbeitungsoptik in der X-Y-Ebene relativ zum Werkstück und/oder durch horizontales Verfahren des Werkstücks in der X-Y-Ebene relativ zur Laserbearbeitungsoptik nach dem Einstechprozess (Post-Prozess) verschoben bzw. positioniert werden. Mit anderen Worten kann die Laserbearbeitungsoptik senkrecht zu einer optischen Achse der Optik bzw. senkrecht zur Strahlachse des Messstrahls verschoben werden, um mit dem Messstrahl bzw. Messfleck 13 die Werkstückoberfläche 3 abzutasten. Beispielsweise kann eine Kollimationsoptik im Strahlengang des Messstrahls verfahren werden, um den Messstrahl entsprechend zu verschieben.

Bezugnehmend auf die Figur 9(b) wird der Messfleck 13 zur Charakterisierung des Einstechlochs 2 und optional des Materialaufwurfs 5 ausgehend von der Mitte des Einstechlochs 2 in zumindest einer Raumrichtung X senkrecht zur Strahlachse des Messstrahls oder parallel zur Werkstückoberfläche 3 positioniert (links in Figur 9(b)). Ein weiteres Beispiel ist ein Kreuzscan in zwei aufeinander senkrecht stehende Richtungen (X-Y-Richtung) ausgehend von der Mitte des Einstechlochs 2 (links in Figur 9(b)).

Bei beiden Optionen wird vorzugsweise eine entsprechend große Anzahl an Messpunkten verwendet, um eine ausreichende Auflösung der geometrischen (insbesondere der dreidimensionalen) Form des Einstechlochs und/oder der Materialanhaftungen und Materialaufwürfe 5 zu erzielen. Darüber hinaus sind weitere Abtaststrategien des Messflecks 13 möglich, wie zum Beispiel spiralförmig um den Mittelpunkt des Einstechlochs 2, in Form einer 8, etc.

Erfindungsgemäß wird eine optische Messeinrichtung, insbesondere ein Kurzkohärenz-Interferometer, zur zeitlichen Auflösung der Einstechtiefe beim Einstechprozess eingesetzt. Somit kann die Einstechtiefe zu jedem Zeitpunkt des Einstechvorgangs bekannt sein. Der wenigstens eine Prozessparameter des Laserbearbeitungssystems wird basierend auf der aktuellen Einstechtiefe gezielt eingestellt bzw. geregelt. Damit erfolgt eine Inline-Regelung des Einstechprozesses (und z.B. einer Durchsticherkennung), wodurch die Dauer des Einstechprozesses minimiert, die Qualität des Einstechlochs optimiert und/oder die Prozessstabilität maximiert werden kann. Beispielsweise kann die Qualität des Einstechlochs durch die Menge und die Ausprägung des Materialaufwurfs, der sich auf der Werkstückoberfläche ablagert, und/oder durch den Durchmesser des Einstechlochs entlang der Ausbreitungsrichtung bestimmt sein. Durch die Inline-Regelung können einer oder mehrere Prozessparameter derart eingestellt werden, dass die Menge und die Ausprägung des Materialaufwurfs und/oder der Durchmesser des Einstechlochs vorbestimmte Qualitätskriterien erfüllen.

## Patentansprüche

1. Verfahren zur Laserbearbeitung eines Werkstücks (1), insbesondere zum Laserschneiden eines Werkstücks (1), mit einem Laserbearbeitungssystem (100), umfassend:
Einstechen eines Einstechlochs (2) in das Werkstück (1) mit einem Laserstrahl (10);
Messen einer aktuellen Einstechtiefe des Einstechlochs (2) durch wenigstens einen optischen Messstrahl (13) während des Einstechvorgangs; und
Einstellen wenigstens eines Prozessparameters des Laserbearbeitungssystems (100) während des Einstechvorgangs basierend auf der aktuellen Einstechtiefe zur Steuerung und/oder Regelung des Einstechvorgangs,
**dadurch gekennzeichnet, dass** eine Änderungsrate der Einstechtiefe bestimmt wird, und der wenigstens eine Prozessparameter basierend auf der Änderungsrate eingestellt wird.

2. Verfahren nach Anspruch 1, wobei die Änderungsrate der Einstechtiefe mit einem Schwellwert verglichen und basierend auf dem Vergleich bestimmt wird, ob ein Durchstechen des Werkstücks (1) möglich ist oder nicht; und/oder
wobei der wenigstens eine Prozessparameter während des Einstechprozesses diskret, kontinuierlich, oder kombiniert diskret und kontinuierlich eingestellt wird.

3. Verfahren nach einem der vorstehenden Ansprüche, wobei der wenigstens eine Prozessparameter des Laserbearbeitungssystems (100) wenigstens einen der folgenden Parameter umfasst oder einer davon ist:
einen Pulsparameter, eine Pulslänge, eine Pulsperiodendauer, eine Pulsspitzenleistung, eine Laserleistung, eine Fokuslage des Laserstrahls (10), einen Fokusdurchmesser des Laserstrahls (10), eine Prozessgaszusammensetzung, einen Prozessgasdruck und einen Abstand zwischen einem Laserbearbeitungskopf (101) und einer Oberfläche (3) des Werkstücks (1).

4. Verfahren nach einem der vorstehenden Ansprüche, wobei basierend auf einem Reflex des optischen Messstrahls (13) von einem Einstechgrund des Einstechlochs (2) die Einstechtiefe bestimmt wird, und wobei ein Durchstechen des Laserstrahls (10) durch das Werkstück (1) darauf basierend erkannt wird, dass kein Reflex vom Einstechgrund mehr erhalten wird, und wobei nach Erkennen des Durchstechens ein Laserbearbeitungsvorgang am Werkstück (1) durchgeführt wird; und/oder
wobei basierend auf einer zuletzt ermittelten Einstechtiefe vor einem Durchstechen des Laserstrahls (10) durch das Werkstück (1) eine Dicke des Werkstücks (1) bestimmt wird.

5. Verfahren nach einem der vorstehenden Ansprüche, wobei bei einem im Wesentlichen konstanten vorgegebenen Abstand zwischen dem Laserbearbeitungssystem (100), insbesondere einem Laserbearbeitungskopf (101) des Laserbearbeitungssystems (100), und einer Oberfläche (3) des Werkstücks (1) während des Einstechvorgangs die aktuelle Einstechtiefe basierend auf dem vorgegebenen Abstand und einem aktuellen Messwert bestimmt wird.

6. Verfahren nach einem der vorstehenden Ansprüche, wobei bei einem sich zeitlich ändernden Abstand zwischen dem Laserbearbeitungssystem (100), insbesondere einem Laserbearbeitungskopf (101) des Laserbearbeitungssystems (100), und einer Oberfläche (3) des Werkstücks (1) während des Einstechvorgangs die aktuelle Einstechtiefe basierend auf einem aktuellen Abstand und einem aktuellen Messwert der optischen Messeinrichtung (200) von einem Einstechgrund des Einstechlochs (2) bestimmt wird.

7. Verfahren nach Anspruch 6, wobei der aktuelle Abstand zwischen dem Laserbearbeitungssystem (100), insbesondere einem Laserbearbeitungskopf (101) des Laserbearbeitungssystems (100), und der Oberfläche (3) des Werkstücks (1) mittels einer Abstandssensoreinheit kapazitiv, induktiv und/oder optisch gemessen wird.

8. Verfahren nach einem der vorstehenden Ansprüche, wobei ein erster optischer Messstrahl (13a) auf einen Einstechgrund des Einstechlochs (2) und ein zweiter optischer Messstrahl (13b) auf eine Oberfläche (3) des Werkstücks (1) gerichtet und die aktuelle Einstechtiefe mittels des ersten optischen Messstrahls (13a) und des zweiten optischen Messstrahls (13b) bestimmt wird.

9. Verfahren nach einem der vorstehenden Ansprüche, wobei während des Einstechvorgangs und/oder nach dem Einstechvorgang mit dem wenigstens einen optischen Messstahl (13) eine Oberfläche (3) des Werkstücks (1) in mindestens einer Richtung senkrecht zur Strahlachse des Laserstrahls (10) abgetastet wird, um eine geometrische Charakterisierung des Einstechlochs (2) durchzuführen.

10. Verfahren nach Anspruch 9, wobei basierend auf der geometrischen Charakterisierung des Einstechlochs (2) wenigstens ein Prozessparameter des Laserbearbeitungssystems (100) für den anschließenden Bearbeitungsvorgang oder für einen nachfolgenden Einstechvorgang eingestellt oder gespeichert wird.

11. Verfahren nach einem der vorstehenden Ansprüche 9 oder 10, wobei basierend auf der geometrischen Charakterisierung des Einstechlochs (2) ein Durchmesser des Einstechlochs (2) an der Werkstückoberfläche (3) und/oder entlang einer Ausdehnungsrichtung des Einstechlochs (2) bestimmt wird.

12. Verfahren nach Anspruch 11, wobei das Laserbearbeitungssystem (100) derart angesteuert wird, um den Durchmesser des Einstechlochs (2) mit dem Laserstrahl (10) zu vergrößern, wenn der Durchmesser gleich oder kleiner als ein Schwellwert ist.

13. Verfahren nach einem der vorstehenden Ansprüche, wobei Werkstücke mit einer Dicke von wenigstens 10 mm, oder von wenigstens 15 mm bearbeitet werden.

14. Laserbearbeitungssystem (100) zum Bearbeiten, insbesondere zum Schneiden, eines Werkstücks (1) mittels eines Laserstrahls (10), umfassend:
einen Laserbearbeitungskopf (101) mit einer Laservorrichtung (110), die eingerichtet ist, um den Laserstrahl (10) zum Einstechen eines Einstechlochs (2) für einen anschließenden Bearbeitungsvorgang auf das Werkstück (1) zu richten; und
eine optische Messeinrichtung (200), die eingerichtet ist, um während des Einstechvorgangs unter Verwendung wenigstens eines optischen Messstrahls (13) eine aktuelle Einstechtiefe des Einstechlochs (2) zu bestimmen; und
eine Steuereinrichtung (300), die eingerichtet ist, um wenigstens einen Prozessparameter des Laserbearbeitungssystems (100) während des Einstechvorgangs basierend auf der aktuellen Einstechtiefe zur Steuerung und/oder Regelung des Einstechvorgangs einzustellen,
**dadurch gekennzeichnet, dass**
das Laserbearbeitungssystem (100) dazu eingerichtet ist, ein Verfahren nach einem der vorhergehenden Ansprüche durchzuführen, wobei die Steuereinrichtung (300) eingerichtet ist, die Änderungsrate der Einstecktiefe zu bestimmen und den wenigstens einen Prozessparameter basierend auf der Änderungsrate der Einstechtiefe einzustellen.

15. Laserbearbeitungssystem (100) nach Anspruch 14, wobei die optische Messeinrichtung (200) ein Kohärenz-Interferometer oder ein Kurzkohärenz-Interferometer umfasst oder ist.

## Claims

1. A method for laser machining a workpiece (1), in particular for laser cutting a workpiece (1), with a laser machining system (100), comprising:
piercing a piercing hole (2) into the workpiece (1) with a laser beam (10);
measuring a current piercing depth of the piercing hole (2) by at least one optical measuring beam (13) during the piercing operation; and
adjusting at least one process parameter of the laser machining system (100) during the piercing operation based on the current piercing depth to control and/or regulate the piercing operation,
**characterised in that** a rate of change of the piercing depth is determined and the at least one process parameter is adjusted based on the rate of change.

2. The method according to claim 1, wherein the rate of change of the piercing depth is compared with a threshold value and, based on the comparison, it is determined whether piercing through the workpiece (1) is possible or not; and/or
wherein the at least one process parameter is adjusted discretely, continuously, or combined discretely and continuously during the piercing operation.

3. The method according to any one of the preceding claims, wherein the at least one process parameter of the laser machining system (100) comprises at least one of or is one of the following parameters:
a pulse parameter, a pulse length, a pulse period duration, a pulse peak power, a laser power, a focus position of the laser beam (10), a focus diameter of the laser beam (10), a process gas composition, a process gas pressure, and a distance between a laser machining head (101) and a surface (3) of the workpiece (1).

4. The method according to any one of the preceding claims, wherein the piercing depth is determined based on a reflection of the optical measuring beam (13) from a piercing bottom of the piercing hole (2), and wherein a piercing through of the laser beam (10) through the workpiece (1) is detected based on that no reflection from the piercing bottom is obtained any longer, and wherein after detecting the piercing through, a laser machining operation is carried out on the workpiece (1); and/or
wherein a thickness of the workpiece (1) is determined based on a most recent detected piercing depth before piercing through of the laser beam (10) through the workpiece (1).

5. The method according to any one of the preceding claims, wherein, with a substantially constant given distance between the laser machining system (100), in particular a laser machining head (101) of the laser machining system (100), and a surface (3) of the workpiece (1) during the piercing operation, the current piercing depth is determined based on the given distance and a current measured value.

6. The method according to any one of the preceding claims, in which, with a time-varying distance between the laser machining system (100), in particular a laser machining head (101) of the laser machining system (100), and a surface (3) of the workpiece (1) during the piercing operation, the current piercing depth is determined based on a current distance and a current measured value of the optical measuring device (200) from a piercing bottom of the piercing hole (2).

7. The method according to claim 6, wherein the current distance between the laser machining system (100), in particular a laser machining head (101) of the laser machining system (100), and the surface (3) of the workpiece (1) is measured capacitively, inductively and/or optically by means of a distance sensor unit.

8. The method according to any one of the preceding claims, wherein a first optical measuring beam (13a) is directed onto a piercing bottom of the piercing hole (2) and a second optical measuring beam (13b) is directed onto a surface (3) of the workpiece (1) and the current piercing depth is determined by means of the first optical measuring beam (13a) and the second optical measuring beam (13b).

9. The method according to any one of the preceding claims, wherein during the piercing operation and/or after the piercing operation a surface (3) of the workpiece (1) is scanned with the at least one optical measuring beam (13) in at least one direction perpendicular to the beam axis of the laser beam (10) in order to carry out a geometric characterisation of the piercing hole (2).

10. The method according to claim 9, wherein, based on the geometric characterisation of the piercing hole (2), at least one process parameter of the laser machining system (100) is adjusted or stored for the subsequent machining operation or for a subsequent piercing operation.

11. The method according to one of the preceding claims 9 or 10, wherein, based on the geometric characterisation of the piercing hole (2), a diameter of the piercing hole (2) at the workpiece surface (3) and/or along an expansion direction of the piercing hole (2) is determined.

12. The method according to claim 11, wherein the laser machining system (100) is driven in order to enlarge the diameter of the piercing hole (2) with the laser beam (10) when the diameter is equal to or smaller than a threshold value.

13. The method according to any one of the preceding claims, wherein workpieces having a thickness of at least 10 mm, or of at least 15 mm are machined.

14. A laser machining system (100) for machining, in particular for cutting, a workpiece (1) by means of a laser beam (10), comprising:
a laser machining head (101) having a laser device (110) configured to direct the laser beam (10) onto the workpiece (1) for piercing a piercing hole (2) for a subsequent machining operation; and
an optical measuring device (200) configured to determine a current piercing depth of the piercing hole (2) during the piercing operation using at least an optical measuring beam (13); and
a control device (300) configured to adjust at least one process parameter of the laser machining system (100) during the piercing operation based on the current piercing depth to control and/or regulate the piercing operation,
**characterised in that**
the laser machining system (100) is configured to carry out a method according to any one of the previous claims, wherein the control device (300) is configured to determine the rate of change of the piercing depth and to adjust the at least one process parameter based on the rate of change of the piercing depth.

15. The laser machining system (100) according to claim 14, wherein the optical measuring device (200) comprises or is a coherence interferometer or a short coherence interferometer.

## Revendications

1. Procédé pour usiner une pièce (1) au laser, en particulier pour découper une pièce (1) au laser, avec un système d'usinage au laser (100), comprenant les étapes consistant à :
percer un trou de perçage (2) dans la pièce (1) avec un faisceau laser (10) ;
mesurer une profondeur de perçage actuelle du trou de perçage (2) par l'intermédiaire d'au moins un faisceau de mesure optique (13) pendant l'opération de perçage ; et
régler au moins un paramètre de processus du système d'usinage au laser (100) pendant l'opération de perçage sur la base de la profondeur de perçage actuelle pour commander et/ou réguler l'opération de perçage,
**caractérisé en ce qu'**un taux de variation de la profondeur de perçage est déterminé et **en ce que** le au moins un paramètre de processus est réglé sur la base du taux de variation.

2. Procédé selon la revendication 1, dans lequel le taux de variation de la profondeur de perçage est comparé à une valeur de seuil et sur la base de la comparaison, il est déterminé si un perçage à travers la pièce (1) est possible ou non ; et/ou
dans lequel le au moins un paramètre de processus est réglé pendant le processus de perçage de façon discrète, continue ou de façons discrète et continue.

3. Procédé selon l'une des revendications précédentes, dans lequel le au moins un paramètre de processus du système d'usinage au laser (100) comprend au moins un des paramètres suivants ou est l'un de ceux-ci :
un paramètre d'impulsion, une longueur d'impulsion, une durée de période d'impulsion, une puissance de crête d'impulsion, une puissance de laser, une position focale du faisceau laser (10), un diamètre focal du faisceau laser (10), une composition de gaz de procédé, une pression de gaz de procédé et une distance entre une tête d'usinage au laser (101) et une surface (3) de la pièce (1).

4. Procédé selon l'une des revendications précédentes, dans lequel la profondeur de perçage est déterminée sur la base d'une réflexion du faisceau de mesure optique (13) à partir d'un fond percé du trou de perçage (2), et dans lequel un perçage du faisceau laser (10) à travers la pièce (1) est reconnu sur la base du fait qu'aucune réflexion n'est plus obtenue à partir du fond percé, et dans lequel une opération d'usinage au laser est réalisée sur la pièce (1) après une détection du perçage ; et/ou
dans lequel une épaisseur de la pièce (1) est déterminée sur la base d'une dernière profondeur de perçage déterminée avant un perçage du faisceau laser (10) à travers la pièce (1).

5. Procédé selon l'une des revendications précédentes, dans lequel à une distance prédéterminée sensiblement constante entre le système d'usinage au laser (100), en particulier une tête d'usinage au laser (101) du système d'usinage au laser (100), et une surface (3) de la pièce (1) pendant l'opération de perçage, la profondeur de perçage actuelle est déterminée sur la base de la distance prédéterminée et d'une valeur mesurée actuelle.

6. Procédé selon l'une des revendications précédentes, dans lequel à une distance variable dans le temps entre le système d'usinage au laser (100), en particulier une tête d'usinage au laser (101) du système d'usinage au laser (100), et une surface (3) de la pièce (1) pendant l'opération de perçage, la profondeur de perçage actuelle est déterminée sur la base d'une distance actuelle et d'une valeur mesurée actuelle du dispositif de mesure optique (200) par rapport à un fond percé du trou de perçage (2).

7. Procédé selon la revendication 6, dans lequel la distance actuelle entre le système d'usinage au laser (100), en particulier une tête d'usinage au laser (101) du système d'usinage au laser (100), et la surface (3) de la pièce (1) est mesurée au moyen d'une unité à capteur de distance de manière capacitive, inductive et/ou optique.

8. Procédé selon l'une des revendications précédentes, dans lequel un premier faisceau de mesure optique (13a) est dirigé vers un fond percé du trou de perçage (2) et un second faisceau de mesure optique (13b) est dirigé vers une surface (3) de la pièce (1), et la profondeur de perçage actuelle est déterminée au moyen du premier faisceau de mesure optique (13a) et du second faisceau de mesure optique (13b).

9. Procédé selon l'une des revendications précédentes, dans lequel, pendant l'opération de perçage et/ou après l'opération de perçage, une surface (3) de la pièce (1) est balayée par au moins un faisceau de mesure optique (13) dans au moins une direction perpendiculaire à l'axe de faisceau du faisceau laser (10) afin d'effectuer une caractérisation géométrique du trou de perçage (2).

10. Procédé selon la revendication 9, dans lequel, sur la base de la caractérisation géométrique du trou de perçage (2), au moins un paramètre de processus du système d'usinage au laser (100) est réglé ou mémorisé pour l'opération d'usinage suivante ou pour une opération de perçage suivante.

11. Procédé selon l'une des revendications 9 ou 10 précédentes, dans lequel, sur la base de la caractérisation géométrique du trou de perçage (2), un diamètre du trou de perçage (2) est déterminé sur la surface de pièce (3) et/ou le long d'une direction d'expansion du trou de perçage (2).

12. Procédé selon la revendication 11, dans lequel le système d'usinage au laser (100) est commandé de manière à agrandir le diamètre du trou de perçage (2) avec le faisceau laser (10), lorsque le diamètre est égal ou inférieur à une valeur de seuil.

13. Procédé selon l'une des revendications précédentes, dans lequel des pièces d'une épaisseur d'au moins 10 mm ou d'au moins 15 mm sont usinées.

14. Système d'usinage au laser (100) pour usiner, en particulier pour découper, une pièce (1) au moyen d'un faisceau laser (10), comprenant :
une tête d'usinage au laser (101) avec un dispositif à laser (110), configurée pour diriger le faisceau laser (10) vers la pièce (1) pour percer un trou de perçage (2) pour une opération d'usinage suivante ; et
un dispositif de mesure optique (200) configuré pour déterminer une profondeur de perçage actuelle du trou de perçage (2) pendant l'opération de perçage en utilisant au moins un faisceau de mesure optique (13) ; et
un dispositif de commande (300) configuré pour régler au moins un paramètre de processus du système d'usinage au laser (100) pendant l'opération de perçage sur la base de la profondeur de perçage actuelle, pour commander et/ou réguler l'opération de perçage,
**caractérisé en ce que**
le système d'usinage au laser (100) est configuré pour mettre en oeuvre un procédé selon l'une des revendications précédentes, dans lequel le dispositif de commande (300) est configuré pour déterminer le taux de variation de la profondeur de perçage et pour régler le au moins un paramètre de processus sur la base du taux de variation de la profondeur de perçage.

15. Système d'usinage au laser (100) selon la revendication 14, dans lequel le dispositif de mesure optique (200) comprend ou est un interféromètre à cohérence ou un interféromètre à cohérence courte.
